# EUROPÄISCHE PATENTANMELDUNG

(11) **EP 4 678 316 A1**
(43) Veröffentlichungstag der Anmeldung: **14.01.2026**
(21) Anmeldenummer: 25185718.1
(22) Anmeldetag: 26.06.2025
(51) Int. Cl.: B23C 3/12, B23C 5/06, B23C 5/10

(54) **FRÄSERANORDNUNG MIT VORAUSEILENDEM ZUSATZFRÄSER**

(30) Priorität: 11.07.2024 DE 102024119821
(71) Anmelder: Urban GmbH & Co. Maschinenbau KG, 87700 Memmingen (DE)
(72) Erfinder: Jocham, Klaus, 87700 Memmingen (DE); Geisler, Kenny, 87700 Memmingen (DE)
(74) Vertreter: Patentanwälte Olbricht, Buchhold, Keulertz Partnerschaft mbB

(57) **Zusammenfassung**

Vorgeschlagen wird eine Fräseranordnung (10), für die Bearbeitung eines Kunststoffprofils, umfassend,
▪ eine Halterung (20), die von einer Längsmittelebene (L) durchsetzt ist,
▪ wobei die Halterung (20) zumindest entlang einer Längsrichtung (R1) beweg- und positionierbar gelagert ist,
▪ wobei die Halterung (20) eine Stirnseite (22) und zwei sich gegenüberliegende Längsseiten (24) aufweist,
▪ zwei erste Fräser (30), die an den Längsseiten (24) angeordnet sind und um eine gemeinsame erste Rotationsachse (32) drehbar gelagert sind, und
▪ zwei zweite Fräser (40), die an den Längsseiten (24) angeordnet sind und um eine gemeinsame zweite Rotationsachse (42) drehbar gelagert sind,
▪ wobei die zweite Rotationsachse (42) zwischen der Stirnseite (22) und der ersten Rotationsachse (32) angeordnet ist.

## Beschreibung

Aus der EP 3 072 615 A1 ist ein Fräskopf bekannt, der zwei Planfräser und zwei Fingerfräser umfasst. Jeder Fingerfräser ist zentral in der Stirnfläche eines Planfräsers angeordnet. Allerdings ist eine solche zentrale Anordnung von Planfräser und Fingerfräser hinsichtlich der Funktionalität begrenzt.

Aufgabe der Erfindung ist daher die entsprechende Verbesserung des Stands der Technik.

Diese Aufgabe ist gelöst mit einer Fräseranordnung gemäß Anspruch 1. Erfindungsgemäße Merkmale sind in Anspruch 1 angegeben. Ausgestaltungen sind Gegenstand der Ansprüche 2 bis 10.

Erfindungsgemäß ist eine Fräseranordnung vorgeschlagen, geeignet für die Bearbeitung eines Kunststoffprofils, wobei die Fräseranordnung umfasst:
▪ eine Halterung, die von einer Längsmittelebene durchsetzt ist,
▪ wobei die Halterung zumindest entlang einer Längsrichtung (oder ersten Raumrichtung) beweg- und positionierbar gelagert ist,
▪ wobei die Halterung eine Stirnseite und zwei sich gegenüberliegende Längsseiten aufweist,
▪ zwei erste Fräser, die an den Längsseiten angeordnet sind und um eine gemeinsame erste Rotationsachse drehbar gelagert sind, und
▪ zwei zweite Fräser, die an den Längsseiten angeordnet sind und um eine gemeinsame zweite Rotationsachse drehbar gelagert sind,
▪ wobei die zweite Rotationsachse zwischen der Stirnseite und der ersten Rotationsachse angeordnet ist.

In Längsrichtung eilen die zweiten Fräser somit den ersten Fräsern voraus. Die zweiten Fräser sind nicht-koaxial mit den ersten Fräsern angeordnet, wobei die Rotationsachsen parallel zueinander verlaufen. Dadurch sind sie grundsätzlich mit unterschiedlichen Drehzahlen betreibbar, selbst wenn nur ein einziger Antrieb vorhanden ist. Ferner ergeben sich dadurch für die zweiten Fräser größere Haltekräfte und somit eine größere Zerspanung. Darüber hinaus können auch härtere Werkstoffe als Kunststoff, wie beispielsweise Aluminium bearbeitet werden. Aufgrund der nicht-koaxialität der ersten und zweiten Fräser erfolgt eine räumliche Entzerrung, so dass die zweiten Fräser nicht vom Bauraummangel bei koaxialer Anordnung beeinträchtigt werden.

Während mit den ersten Fräsern die Stirn- oder Gehrungsflächen von zu verschweißenden Kunststoffprofilen bearbeitet werden können, lassen sich mit den zweiten Fräsern weitere vielfältige Fräsaufgaben erledigen ohne, dass die Kunststoffprofile aus der Einspannung gelöst oder gar entnommen werden müssen und ohne, dass die ersten Fräser ebenfalls in einen Zwischenraum von zwei Gehrungsflächen benachbarter Kunststoffprofile verstellt werden müssen.

Die zweiten Fräser können beispielsweise für die Bearbeitung einer Profilkante verwendet werden, also für die Bearbeitung eines sichtbaren Außenbereichs der Kunststoffprofile. Die zweiten Fräser können aber ebenso zur Ausbildung zumindest einer Nut oder eines Nutbereichs im stirnseitigen Endbereich der zu verschweißenden Kunststoffprofile verwendet werden ohne, dass ein Fräser gewechselt werden muss. Weiter ist es möglich, dass zuerst eine Planbearbeitung durch die ersten Fräser erfolgt und nach einer Neupositionierung der Halterung relativ zu den Kunststoffprofilen die zweiten Fräser die Kunststoffprofile bearbeiten oder umgekehrt.

Die zwei ersten Fräser liegen auf einer gemeinsamen Rotationsachse und sind einander gegenüberliegend auf beiden Längsseiten der Halterung angeordnet. Auf diese Weise können zwei Gehrungsflächen der zu verschweißenden Kunststoffprofile gleichzeitig bearbeitet werden. Gleiches gilt für die beiden zweiten Fräser.

Die Längsseiten können sich bezüglich der Längsmittelebene gegenüberliegen und die seitlichen Außenseiten der Halterung bilden. Neben der Stirnseite kann die Halterung zudem noch eine Oberseite und eine Unterseite aufweisen. Die Halterung kann von einer Längsachse durchgriffen sein. Die zweite Rotationsachse ist dann entlang der Längsrichtung zwischen der Stirnseite und der ersten Rotationsachse angeordnet ist. Die ersten und zweiten Fräser können gemeinsam mit der Halterung beweg- und positionierbar sein. Dadurch kann die Beweglichkeit der Halterung für die Fräser genutzt werden. Die Halterung kann zusätzlich entlang einer Hochrichtung (oder zweiten Raumrichtung) beweg- und positionierbar gelagert sein. Denkbar ist, dass die Halterung nicht entlang einer Querrichtung (oder dritten Raumrichtung) beweg- und positionierbar gelagert ist. Gegebenenfalls nötige Bewegungen in Querrichtung können von fräserbezogenen Verstellmitteln durchgeführt werden. Die genannten Raumrichtungen sind kartesisch. Die Halterung kann einen Hauptkörper und ein Fräsmodul umfassen. Hauptkörper und Fräsmodul können separate Teile sein. Die ersten Fräser können am Hauptkörper und die zwei zweiten Fräser können am Fräsmodul angeordnet sein. Die ersten Fräser und/oder zweiten Fräser können spiegelsymmetrisch bezüglich der Längsmittelebene angeordnet sein.

Gemäß einer Weiterbildung können die ersten Fräser Stirnplanfräser sein und/oder die zweiten Fräser Fingerfräser sein. Mittels der Stirnplanfräser können Kunststoffprofile großflächig bearbeitet werden, beispielsweise zum effizienten Ebnen von Gehrungsflächen. Die Fingerfräser dienen insbesondere dazu, an den Kunststoffprofilen vorgesehene Dichtungs- oder Aufnahmenuten frei zu fräsen. Gerade die Kombination dieser unterschiedlichen Fräswerkzeuge und der erfindungsgemäßen Anordnung ermöglicht, dass durch weniger Kraftaufwand mehr Material abgehoben werden und zudem unterschiedliche Materialien bearbeitet werden können.

Gemäß einer Weiterbildung kann die Fräseranordnung ein Querrichtungsverstellmittel umfassen, um die zweiten Fräser in einer Querrichtung zwischen einer eingefahrenen Ruhestellung und einer ausgefahrenen Arbeitsstellung zu verstellen. Dies erübrigt ein Verstellmittel für die gesamte Halterung. Somit sind die zweiten Fräser zwischen zumindest zwei Stellungen verstellbar, wobei sie in der Ruhestellung ein Fräsen der ersten Fräser nicht beeinflussen. Die zwei ersten Fräser weisen in Querrichtung einen ersten Breitenabstand auf. Die zwei zweiten Fräser weisen in Querrichtung einen Ruhestellungsbreitenabstand und einen Arbeitsstellungsbreitenabstand auf. Der Ruhestellungsbreitenabstand kann gleich oder kleiner dem ersten Breitenabstand sein. Der Arbeitsstellungsbreitenabstand kann gleich oder größer dem ersten Breitenabstand sein. In Ruhestellung können die zweiten Fräser in Querrichtung gegenüber den ersten Fräsern zurückstehen. In Ruhestellung können sich die ersten Fräser daher weiter in die Querrichtung erstrecken, als es die zweiten Fräser tun. Die zweiten Fräser sind in Ruhestellung in Richtung Längsmittelebene verstellt. In Arbeitsstellung sind jedoch die zweiten Fräser gegenüber der Längsmittelebene in Querrichtung verstellt und springen gegenüber den Stirnfräsern hervor. Dies ermöglicht beispielsweise, dass die Halterung in Längsrichtung zwischen zwei Gehrungsflächen gefahren werden kann und die zweiten Fräser ungenutzt dort hindurchgestellt werden können. Die Verstellung kann gemeinsam erfolgen. Zudem können die zweiten Fräser aufgrund ihrer vorauseilenden Anordnung weit in Querrichtung ausgestellt werden.

Gemäß einer Weiterbildung kann das Querrichtungsverstellmittel einen (ersten) Fluiddruckraum umfassen, in den ein unter Druck stehendes Fluid einleitbar ist zur Verstellung der zweiten Fräser zwischen ihrer Ruhestellung und Arbeitsstellung, bzw. von der Ruhestellung in die Arbeitsstellung. Alternativ oder zusätzlich kann das Querrichtungsverstellmittel zumindest einen (zweiten) Fluiddruckraum umfassen, in den ein unter Druck stehendes Fluid einleitbar ist zur Verstellung der zweiten Fräser zwischen ihrer Arbeitsstellung und Ruhestellung, bzw. von der Arbeitsstellung in die Ruhestellung. Das Fluid kann Luft sein. Eine fluidische Verstellung, insbesondere in beide Stellungen, ist einfach und bauraumvorteilhaft, da keine mechanischen Verstellkomponenten nötig sind. Der entsprechend Fluiddruckraum ist von einer Druckfläche begrenzt, auf die der Fluiddruck verstellend wirken kann. Denkbar ist, dass die Druckfläche mit einer Tragplatte verbunden ist. Die entsprechende Druckfläche ist mit dem zweiten Fräser verbunden. Jedem zweiten Fräser kann eine separate Druckfläche zugeordnet ein. Der Fluiddruckraum kann im Fräsmodul ausgebildet sein. Dadurch ist kein Bauraum im Hauptkörper dafür benötigt.

Der (erste) Fluiddruckraum kann mittig bezüglich der Längsseiten angeordnet sein und/oder Fluid aufnehmen, welches einen oder beide zweiten Fräser mit einer Kraft in Richtung Arbeitsstellung beaufschlagen kann. Dadurch können sich beide zweiten Fräser bauraumvorteilhaft einen einzigen Fluiddruckraum teilen.

Der (erste) Fluiddruckraum kann in Längsrichtung betrachtet zur einen Seite von einer beweglich gelagerten ersten Druckplatte begrenzt sein und zur gegenüberliegenden Seite von einer beweglich gelagerten zweiten Druckplatte begrenzt sein. Jede Druckplatte kann mit dem entsprechenden zweiten Fräser verbunden sein. Die Druckplatten können die Druckflächen des (ersten) Fluiddruckraums ausbilden. Dadurch kann eine einfache mechanische Kopplung zwischen dem fluidbedingten Verstellen der Druckplatte(n) und der Verstellung der zweiten Fräser zwischen ihrer Ruhestellung und Arbeitsstellung erreicht werden.

Der zumindest eine (zweite) Fluiddruckraum kann zwischen einer der beiden Längsseiten und dem (ersten) Fluiddruckraum angeordnet sein und/oder Fluid aufnehmen, welches einen oder beide zweiten Fräser mit einer Kraft in Richtung Ruhestellung beaufschlagen kann.

Dadurch können sich beide zweiten Fräser bauraumvorteilhaft einen einzigen Fluiddruckraum teilen.

Der zumindest eine (zweite) Fluiddruckraum kann in Längsrichtung betrachtet zur einen Seite von einer ersten Führungsplatte begrenzt sein und zur gegenüberliegenden Seite von einer der ersten und zweiten Druckplatte begrenzt sein. Die Führungsplatte kann von einem Befestigungselement in Querrichtung durchgriffen sein und dieses führen. Die Führungsplatte kann unbeweglich befestigt sein, vorzugsweise bezüglich des Hauptkörpers unbeweglich sein. Dadurch kann in einfacher Weise der zumindest eine (zweite) Fluiddruckraum geschaffen werden, der sich mit dem (ersten) Fluiddruckraum eine Druckplatte teilt. Die Volumina vom zumindest einem (zweiten) Fluiddruckraum und (ersten) Fluiddruckraum stehen somit in einem umgekehrten Größenverhältnis - die Volumenzunahme des einen führt direkt zur Volumenabnahme des anderen.

Das Querrichtungsverstellmittel kann je zweitem Fräser zumindest eine Druckplatte aufweisen. Die Druckplatte ist mit dem jeweiligen zweitem Fräser oder Fingerfräser zur gemeinsamen Verstellung zwischen Ruhestellung und Arbeitsstellung verbunden. Die Druckplatte kann in Querrichtung beweglich gelagert sein. Die Druckplatte kann zumindest eine Druckfläche ausbilden, vorzugsweise zwei Druckflächen an sich gegenüberliegenden Seiten ausbilden. Die Druckplatte kann den ersten vom zweiten Fluiddruckraum trennen. Dadurch kann eine Druckfläche den einen Fluiddruckraum begrenzen und die andere Druckfläche den anderen Fluiddruckraum begrenzen. Je nach Druckzustand in den getrennten Fluiddruckräumen wird die Druckplatte dann in Querrichtung von der Längsmittelebene distanziert (Arbeitsstellung) oder angenähert (Ruhestellung). Denkbar ist aus bauraumgründen, dass zwei Druckplatten einen einzigen Fluiddruckraum begrenzen.

Gemäß einer Weiterbildung kann die Fräseranordnung ein Fräsmodul umfassen, welches die zweiten Fräser umfasst. Das Fräsmodul kann stirnseitig des Hauptkörpers angeordnet sein und die Stirnseite der Halterung ausbilden. Das Fräsmodul ermöglicht große Konstruktionsfreiheit, denn gleiche Hauptkörper können mit unterschiedlichen Fräsmodulen montiert werden. Gleichteile bedingen weniger Änderungsbedarf.

Gemäß einer Weiterbildung kann das Fräsmodul mittels zwei Schrauben befestigt sein, vorzugsweise mittels genau zwei Schrauben, wobei in Längsrichtung betrachtet die Schrauben ausschließlich zu einer Seite der ersten Rotationsachse oder der zweiten Rotationsachse angeordnet sind. Mit Vorteil reichen zwei Schrauben zur Fixierung aus. Die Schrauben sind in den Hauptkörper geschraubt. Die Anordnung der Schrauben dient ihrer örtlichen Konzentrierung und vereinfacht die Montage. Zudem muss kein Raum freigehalten werden, um die Schrauben bei der Montage erreichen zu können. Die Schrauben können spiegelsymmetrisch bezüglich der Längsmittelebene angeordnet sein, um eine gleichmäßige Kraftverteilung zu erreichen. Die Schrauben können in den ersten oder oberen 25% der Bauhöhe des Fräsmoduls verortet sein (bezogen auf die Hochrichtung). Es hat sich gezeigt, dass diese randnahe Anordnung die oben genannten Vorteile verstärkt.

Gemäß einer Weiterbildung kann das Fräsmodul auf einer Tragschiene aufsitzen. Dies dient dem sicheren Abstützen des Fräsmoduls. Die Tragschiene kann sich einstückig entlang des Hauptkörpers und Fräsmoduls erstrecken und dieses unterbauen. Denkbar ist, dass die Tragschiene Führungsnuten aufweist, die der Führung des Halters dienen. Die Führungsnuten können sich bezüglich der Längsmittelebene gegenüberliegen und/oder sich entlang der Längsseiten der Tragschiene erstrecken.

Gemäß einer Weiterbildung kann das Fräsmodul zu beiden Längsseiten jeweils eine Absaugöffnung und/oder zu beiden Längsseiten jeweils einen Späneschutz umfassen. Die Absaugöffnung dient dem Entfernen von Spänen, die andernfalls eine Schweißqualität beeinflussen können. Der Späneschutz kann eine umfangsseitig geschlossene Wandung sein, die in Querrichtung vom Halter abragt. Der Späneschutz kann flexibel sein. Der Späneschutz kann aus Borsten gebildet sein. Dadurch ist er flexibel und kann sich wegbiegen, sofern er gegen ein Profil verstellt wird. Denkbar ist, dass die Absaugöffnung und/oder der Späneschutz von dem Querrichtungsverstellmittel verstellbar sind. Dann weisen die beiden Späneschutze in Ruhestellung der zweiten Fräser in Querrichtung einen Passivbreitenabstand auf. Der Passivbreitenabstand kann gleich oder größer dem ersten Breitenabstand sein. Da nämlich die Späneschutze flexibel sein können, müssen sie nicht zwingend in Querrichtung hinter den ersten Fräsern zurückstehen. Der entsprechende zweite Fräser kann innerhalb der Wandung angeordnet sein. Die entsprechende Absaugöffnung kann innerhalb der Wandung angeordnet sein. Die entsprechende Absaugöffnung kann in einer Tragplatte ausgebildet sein. Der entsprechende Späneschutz kann von einer Tragplatte getragen werden.

Gemäß einer Weiterbildung kann das Fräsmodul zu beiden Längsseiten jeweils eine Tragplatte aufweisen, an der der entsprechende zweite Fräser gelagert ist. Die Tragplatten können die Längsseiten des Fräsmoduls bilden. Sie dienen der Abdeckung und dem Tragen diverser Komponenten, beispielsweise der zweiten Fräser, der Absaugöffnung und/oder des Späneschutzes. Es ist daher nur ein längsseitliches Verkleidungsteil nötig. Denkbar ist, dass die Tragplatten von dem Querrichtungsverstellmittel verstellbar sind. Dann nämlich müssen in vorteilhafter Weise lediglich die Tragplatten in Querrichtung verstellt werden, um die Ruhestellung und Arbeitsstellung zu erreichen. Die ebenfalls an der Tragplatte angeordneten Komponenten sind sodann zwangsgekoppelt und verstellen sich gemeinsam mit.

Gemäß einer Weiterbildung können die zweiten Fräser mit den ersten Fräsern über einen Riementrieb verbunden sein. Der Riementrieb umfasst einen Riemen als Mittel zur Bewegungs- bzw. Kraftübertragung. Je nach Übersetzung des Riementriebs können die Drehzahlen zwischen den ersten Fräsern und den zweiten Fräsern verschieden sein. Beispielsweise kann der Riementrieb ausgebildet sein, die zweiten Fräser mit einer Drehzahl zu betreiben, die im Bereich der 1-fachen bis 3-fachen Drehzahl der ersten Fräser entspricht/liegt, vorzugsweise der 2-fachen Drehzahl.

Sollten Bauteile mehrfach offenbart sein, sollen Ausgestaltungen und Vorteile, die nur für eines der Bauteile beschrieben sind, gleichsam auch für die anderen entsprechenden Bauteile als in optionaler Weise offenbart gelten. Die beschriebenen Vorteile ergeben sich insbesondere in den genannten Bereichsgrenzen, jedoch können die Vorteile auch jenseits einer oder beider konkreten Bereichsgrenzen vorliegen, wenn auch nur in abgeschwächter Ausprägung.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine Perspektivansicht einer Fräseranordnung,
- Fig. 2: eine Schnittansicht entlang der Linie II-II aus Fig. 1 in Ruhestellung und Arbeitsstellung,
- Fig. 3: eine schematische Ansicht der Fräseranordnung in Ruhestellung und
- Fig. 4: eine schematische Ansicht der Fräseranordnung in Arbeitsstellung.

In den Figuren sind gleiche oder einander entsprechende Elemente jeweils mit den gleichen Bezugszeichen bezeichnet und werden daher, sofern nicht zweckmäßig, nicht erneut beschrieben. Bereits beschriebene Merkmale werden zur Vermeidung von Wiederholungen nicht erneut beschrieben und sind auf alle Elemente mit gleichen oder einander entsprechenden Bezugszeichen anwendbar, sofern nicht explizit ausgeschlossen. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z. B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

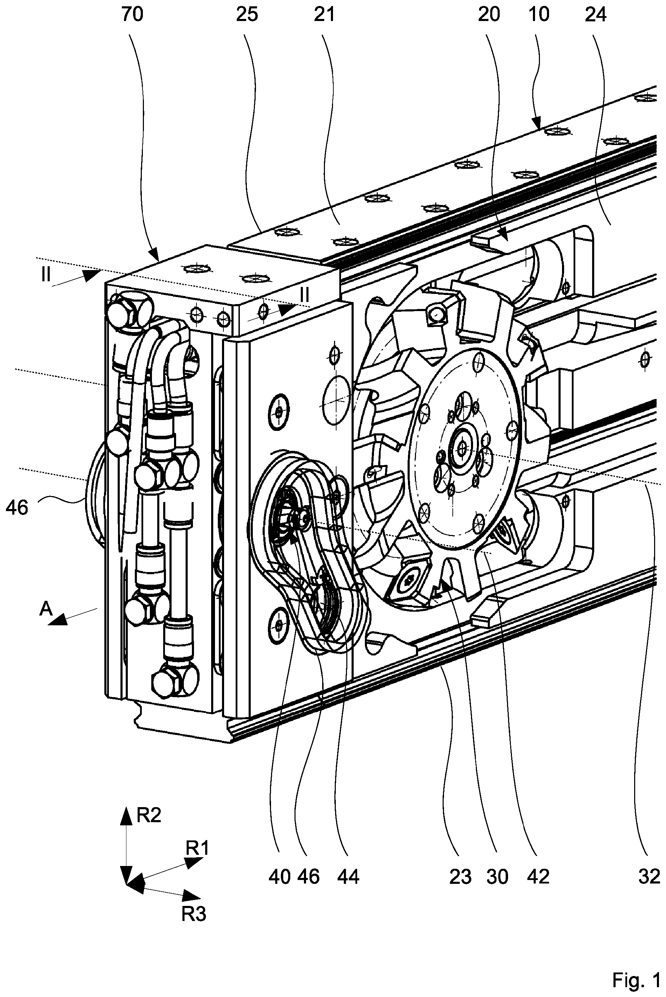

Die Figuren 1 bis 4 zeigen eine einzige Fräseranordnung 10. Die Fräseranordnung 10 dient der Bearbeitung zumindest eines Kunststoffprofils, vorzugsweise zweier Kunststoffprofile. Sie umfasst eine Halterung 20, die von einer Längsmittelebene L und eine Längsachse A durchsetzt ist. Ein (hier nicht dargestellter) Antrieb kann wahlweise bewirken, dass die Halterung 20 entlang einer Längsrichtung R1 oder ersten Raumrichtung und entlang einer Hochrichtung R2 oder zweiten Raumrichtung beweg- und positionierbar ist. Eine Querrichtung R3 oder dritte Raumrichtung vervollständigt das kartesische Koordinatensystem. Die Halterung 20 weist eine Stirnseite 22, zwei sich bezüglich der Längsmittelebene L gegenüberliegende Längsseiten 24, eine Oberseite 21 und eine Unterseite 23 auf. Die Halterung 20 umfasst einen Hauptkörper 25 und stirnseitig dazu ein separates Fräsmodul 70, wobei das Fräsmodul 70 die Stirnseite 22 ausbildet.

Das Fräsmodul 70 ist mittels genau zweier Schrauben 72 befestigt. Dadurch sind das Fräsmodul 70 und der Hauptkörper 25 miteinander verschraubt. In Längsrichtung R1 betrachtet, sind die beiden Schrauben 72 ausschließlich zu einer Seite der zweiten Rotationsachse 42 angeordnet, wobei die Schrauben 72 spiegelsymmetrisch bezüglich der Längsmittelebene L angeordnet und in den ersten oder oberen 25% der Bauhöhe des Fräsmoduls 70 verortet sind, bezogen auf die Hochrichtung R2. Das Fräsmodul 70 sitzt zudem auf einer Tragschiene 26 der Fräseranordnung 10 auf. Die Tragschiene 26 erstreckt sich einstückig entlang des Hauptkörpers 25 und des Fräsmoduls 70 und unterbaut diese. An beiden Längsseiten weist die Tragschiene 26 Führungsnuten auf.

Die Fräseranordnung 10 umfasst zwei erste Fräser 30 als Stirnplanfräser. Die ersten Fräser 30 sind am Hauptkörper 25 an den Längsseiten 24 angeordnet und um eine gemeinsame erste Rotationsachse 32 drehbar gelagert. Die Fräseranordnung 10 umfasst ferner zwei zweite Fräser 40 als Fingerfräser. Die zweiten Fräser 40 sind am Fräsmodul 70 an den Längsseiten 24 angeordnet und um eine gemeinsame zweite Rotationsachse 42 drehbar gelagert. Die ersten Fräser 30 und die zweiten Fräser 40 sind jeweils spiegelsymmetrisch bezüglich der Längsmittelebene L angeordnet. Die Rotationsachsen 32, 42 sind entlang der Längsachse A hintereinander angeordnet. Die zweite Rotationsachse 42 ist zwischen der Stirnseite 22 und der ersten Rotationsachse 32 angeordnet.

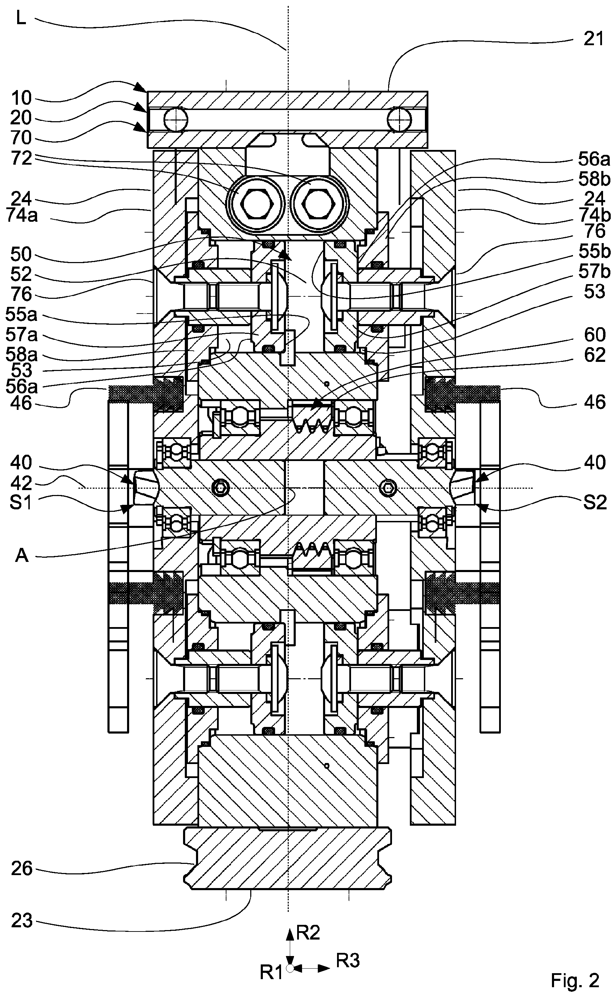

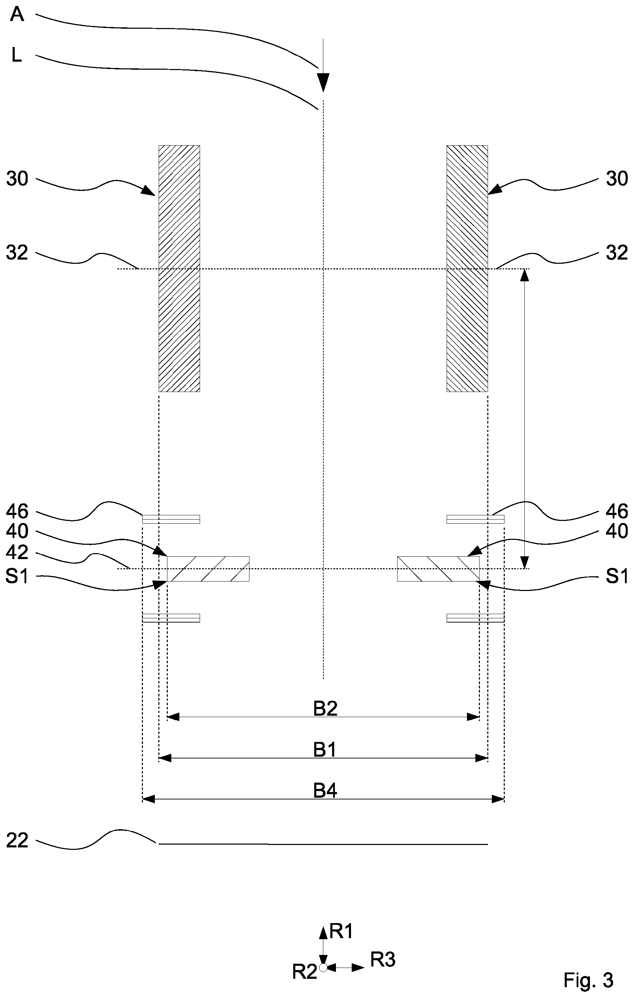

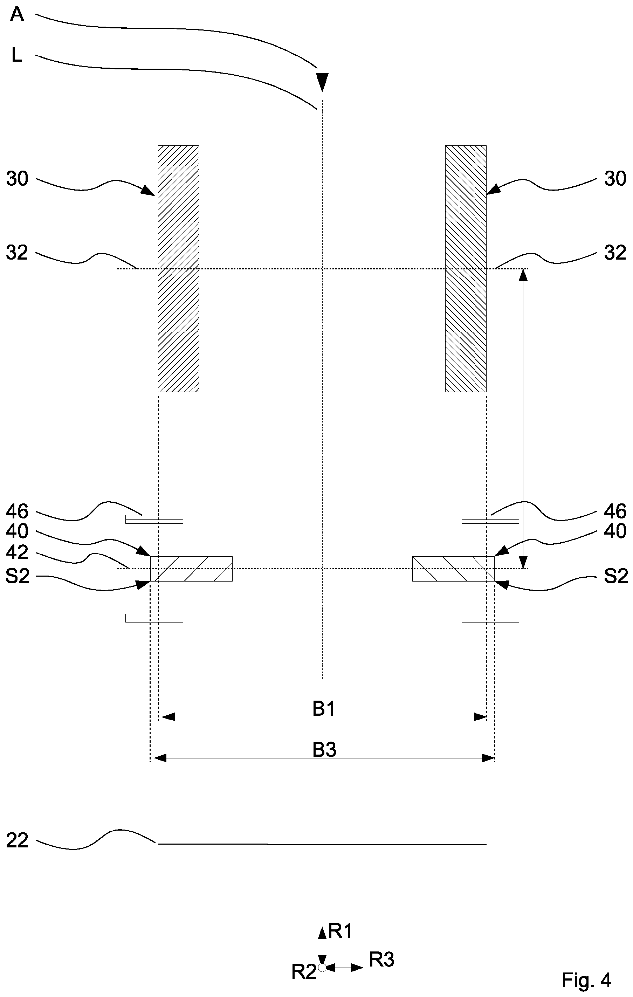

Die Fräseranordnung 10 umfasst zudem ein Querrichtungsverstellmittel 50 zur Verstellung der zweiten Fräser 70 zwischen ihrer Ruhestellung S1 (Fig. 2 links, Fig. 3) und Arbeitsstellung S2 (Fig. 2 rechts, Fig. 4).

Das Querrichtungsverstellmittel 50 umfasst einen ersten Fluiddruckraum 52, der mittig bezüglich der Längsseiten 24 angeordnet ist und Fluid aufnimmt, welches beide zweiten Fräser 40 mit einer Kraft in Richtung Arbeitsstellung S2 beaufschlagt. Der erste Fluiddruckraum 52 ist in Längsrichtung R1 betrachtet zur einen Seite von einer beweglich gelagerten ersten Druckplatte 57a begrenzt und zur gegenüberliegenden Seite von einer beweglich gelagerten zweiten Druckplatte 57b begrenzt. Jede Druckplatte 57a, 57b ist mit dem entsprechenden zweiten Fräser 40 verbunden. Die Druckplatten 57a, 57b bilden die Druckflächen 55a, 55b des ersten Fluiddruckraums 52 aus.

Das Querrichtungsverstellmittel 50 umfasst ferner zwei zweite Fluiddruckräume 53, wobei jeder zweite Fluiddruckraum 53 zwischen einer der beiden Längsseiten 24 und dem ersten Fluiddruckraum 52 angeordnet ist. Jeder zweite Fluiddruckraum 53 nimmt Fluid auf, welches den entsprechenden zweiten Fräser 40 mit einer Kraft in Richtung Ruhestellung S1 beaufschlagt. Jeder zweite Fluiddruckraum 53 ist in Längsrichtung R1 betrachtet zur einen Seite von einer ersten Führungsplatte 58a bzw. 58b und zur gegenüberliegenden Seite von einer der Druckplatten 57a, 57b begrenzt. Die Druckplatten 57a, 57b bilden auch für die zwei zweiten Fluiddruckräume 53 die Druckflächen 56a, 56b aus.

Ein Befestigungselement 76 durchgreift jeweils eine Führungsplatte 58a bzw. 58b und wird geführt. Jedes Befestigungselement 76 ist zur einen Endseite mit einer Druckplatte 57a, 57b und zur anderen Endseite mit einer Tragplatte 74a, 74b verbunden. An jeder Tragplatte 74a, 74b ist ein zweiter Fräser 40 gelagert.

Ausgehend von der Ruhestellung S1 kann ein Fluid in den Fluiddruckraum 52 eingeführt werden. Der Fluiddruck wirkt auf die Druckflächen 55a, 55b und verstellt die Druckplatten 57a, 57b in Querrichtung R3 in Richtung Arbeitsstellung S2. Dabei verstellen sich gleichsam auch die jeweiligen Befestigungselemente 76 und Tragplatten 74a, 74b mitsamt der jeweiligen zweiten Fräser 40. Durch die Verstellung nimmt das Volumen der zweiten Fluiddruckräume 53 ab. Zur Verstellung der zweiter Fräser 40 zurück in ihre Ruhestellung S1 kann ein Fluid in die zweiten Fluiddruckräume 53 eingeführt werden. Der Fluiddruck wirkt auf die Druckflächen 56a, 56b und verstellt die Druckplatten 57a, 57b in Querrichtung R3 in Richtung Ruhestellung S1.

Die zwei ersten Fräser 30 weisen in Querrichtung R3 einen ersten Breitenabstand B1 auf. Die zwei zweiten Fräser 40 weisen in Querrichtung R3 in Ruhestellung S1 einen Ruhestellungsbreitenabstand B2 und in Arbeitsstellung einen Arbeitsstellungsbreitenabstand B3 auf. Der Ruhestellungsbreitenabstand B2 ist gleich oder kleiner dem ersten Breitenabstand B1. Der Arbeitsstellungsbreitenabstand B3 ist gleich oder größer dem ersten Breitenabstand B1.

Jeder Tragplatte 74a, 74b bildet eine Absaugöffnung 44 aus und trägt einen aus flexiblen Borsten gebildeten Späneschutz 46. Jeder Späneschutz 46 ist eine umfangsseitig geschlossene Wandung, innerhalb der der jeweilige zweite Fräser 40 und die jeweilige Absaugöffnung 44 verortet sind. In Ruhestellung S1 weisen die Späneschutze 46 in Querrichtung R3 einen Passivbreitenabstand B4 auf. Der Passivbreitenabstand B4 ist gleich oder größer dem ersten Breitenabstand B1.

Die zweiten Fräser 40 sind mit den ersten Fräsern 30 über einen Riementrieb 60 verbunden, der einen Riemen 62 umfasst.

Die Erfindung ist nicht auf eine der vorbeschriebenen Ausführungsformen beschränkt, sondern in vielfältiger Weise abwandelbar. Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

In den Rahmen der Erfindung fallen sämtliche Kombinationen aus zumindest zwei von den in der Beschreibung, den Ansprüchen und/oder den Figuren offenbarten Merkmalen.

Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale als vorrichtungsgemäß offenbart gelten und beanspruchbar sein.

### Bezugszeichenliste

- 10: Fräseranordnung
- 20: Halterung
- 21: Oberseite
- 22: Stirnseite
- 23: Unterseite
- 24: Längsseite
- 26: Tragschiene
- 30: erster Fräser
- 32: erste Rotationsachse
- 40: zweiter Fräser
- 42: zweite Rotationsachse
- 44: Absaugöffnung
- 46: Spänschutz

- 50: Querrichtungsverstellmittel
- 52: Fluiddruckraum
- 53: Fluiddruckraum
- 55a: Druckfläche
- 55b: Druckfläche
- 56a: Druckfläche
- 56b: Druckfläche
- 57a: Druckplatte
- 57b: Druckplatte
- 58a: Führungsplatte
- 58b: Führungsplatte

- 60: Riementrieb
- 62: Riemen

- 70: Fräsmodul
- 72: Schraube
- 74: Tragplatte
- 76: Befestigungselement

- A: Längsachse
- B1: Breitenabstand
- B2: Breitenabstand
- B3: Breitenabstand
- B4: Passivbreitenabstand
- L: Längsmittelebene
- R1: Längsrichtung
- R2: Hochrichtung
- R3: Querrichtung
- S1: Ruhestellung
- S2: Arbeitsstellung

## Patentansprüche

1. Fräseranordnung (10), für die Bearbeitung eines Kunststoffprofils, umfassend,
▪ eine Halterung (20), die von einer Längsmittelebene (L) durchsetzt ist,
▪ wobei die Halterung (20) zumindest entlang einer Längsrichtung (R1) beweg- und positionierbar gelagert ist,
▪ wobei die Halterung (20) eine Stirnseite (22) und zwei sich gegenüberliegende Längsseiten (24) aufweist,
▪ zwei erste Fräser (30), die an den Längsseiten (24) angeordnet sind und um eine gemeinsame erste Rotationsachse (32) drehbar gelagert sind, und
▪ zwei zweite Fräser (40), die an den Längsseiten (24) angeordnet sind und um eine gemeinsame zweite Rotationsachse (42) drehbar gelagert sind,
▪ wobei die zweite Rotationsachse (42) zwischen der Stirnseite (22) und der ersten Rotationsachse (32) angeordnet ist.

2. Fräseranordnung nach Anspruch 1, **dadurch gekennzeichnet, dass** die ersten Fräser (30) Stirnplanfräser sind und/oder die zweiten Fräser (40) Fingerfräser sind.

3. Fräseranordnung nach einem der voranstehenden Ansprüche, **gekennzeichnet durch** ein Querrichtungsverstellmittel (50), um die zweiten Fräser (40) in einer Querrichtung (R3) zwischen einer eingefahrenen Ruhestellung (S1) und einer ausgefahrenen Arbeitsstellung (S2) zu verstellen.

4. Fräseranordnung nach Anspruch 3, **dadurch gekennzeichnet, dass** das Querrichtungsverstellmittel (50) einen Fluiddruckraum (52) umfasst, in den ein unter Druck stehendes Fluid einleitbar ist zur Verstellung der zweiten Fräser (40) zwischen ihrer Ruhestellung (S1) und Arbeitsstellung (S2) und/oder zumindest einen Fluiddruckraum (53) umfasst, in den ein unter Druck stehendes Fluid einleitbar ist zur Verstellung der zweiten Fräser (40) zwischen ihrer Arbeitsstellung (S2) und Ruhestellung (S1).

5. Fräseranordnung nach einem der voranstehenden Ansprüche, **gekennzeichnet durch** ein Fräsmodul (70), welches die zweiten Fräser (40) umfasst.

6. Fräseranordnung nach Anspruch 5, **dadurch gekennzeichnet, dass** das Fräsmodul (70) mittels zwei Schrauben (72) befestigt ist, vorzugsweise mittels genau zwei Schrauben (72), wobei in Längsrichtung (R1) betrachtet die Schrauben (72) ausschließlich zu einer Seite der ersten Rotationsachse (32) oder der zweiten Rotationsachse (42) angeordnet sind.

7. Fräseranordnung nach Anspruch 5 oder 6, **dadurch gekennzeichnet, dass** das Fräsmodul (70) auf einer Tragschiene (26) aufsitzt.

8. Fräseranordnung nach einem der Ansprüche 5 bis 7, **dadurch gekennzeichnet, dass** das Fräsmodul (70) zu beiden Längsseiten (24) jeweils eine Absaugöffnung (44) und/oder zu beiden Längsseiten (24) jeweils einen Späneschutz (46) umfasst.

9. Fräseranordnung nach einem der Ansprüche 5 bis 8, **dadurch gekennzeichnet, dass** das Fräsmodul (70) zu beiden Längsseiten (24) jeweils eine Tragplatte (74a, 74b) aufweist, an der der entsprechende zweite Fräser (40) gelagert ist.

10. Fräseranordnung nach einem der voranstehenden Ansprüche, **dadurch gekennzeichnet, dass** die zweiten Fräser (40) mit den ersten Fräsern (30) über einen Riementrieb () verbunden sind.
